# FASCICULE DE BREVET EUROPEEN

(11) **EP 2 714 517 B1**
(45) Date de publication et mention de la délivrance du brevet: **02.08.2017**
(21) Numéro de dépôt: 12728720.9
(22) Date de dépôt: 21.05.2012
(51) Int. Cl.: B64D 29/00, B64D 29/06, F01D 25/24, B64D 33/02

(54) **ENSEMBLE POUR UNE NACELLE D'AÉRONEF**
ANORDNUNG FÜR EINE FLUGZEUGTRIEBWERKSGONDEL
ASSEMBLY FOR AN AIRCRAFT NACELLE

(30) Priorité: 30.05.2011 FR 1154685
(43) Date de publication de la demande: 09.04.2014
(73) Titulaire: Safran Nacelles, 76700 Gonfreville-l'Orcher (FR)
(72) Inventeur: CAZUC, Xavier, F-76610 Le Havre Rouelles (FR); THOREL, Christophe, F-76620 Le Havre (FR); MOUTIER, John, F-76620 Le Havre (FR)
(74) Mandataire: Gaillarde, Frédéric F. Ch.
(86) Numéro de dépôt international: PCT/FR2012/051123
(87) Numéro de publication internationale: WO 2012/164197

(56) Documents cités:
- EP-A2- 1 357 279
- EP-A2- 1 777 377
- GELBE H ED - BEITZ W ET AL: "Dubbel-Taschenbuch für den Maschinenbau - Teil K", 1 January 2001 (2001-01-01), DUBBEL - TASCHENBUCH FÜR DEN MASCHINENBAU, SPRINGER, BERLIN, PAGE(S) 8 - 11, XP002511776, ISBN: 978-3-540-67777-2

## Description

La présente invention concerne un ensemble comportant une bride et une plaque de renfort de cette bride, destiné à une nacelle d'aéronef.

Une nacelle de turboréacteur d'aéronef possède une structure comprenant une entrée d'air, une section médiane entourant une soufflante de turboréacteur, et une section aval entourant le turboréacteur et abritant généralement un système d'inversion de poussée.

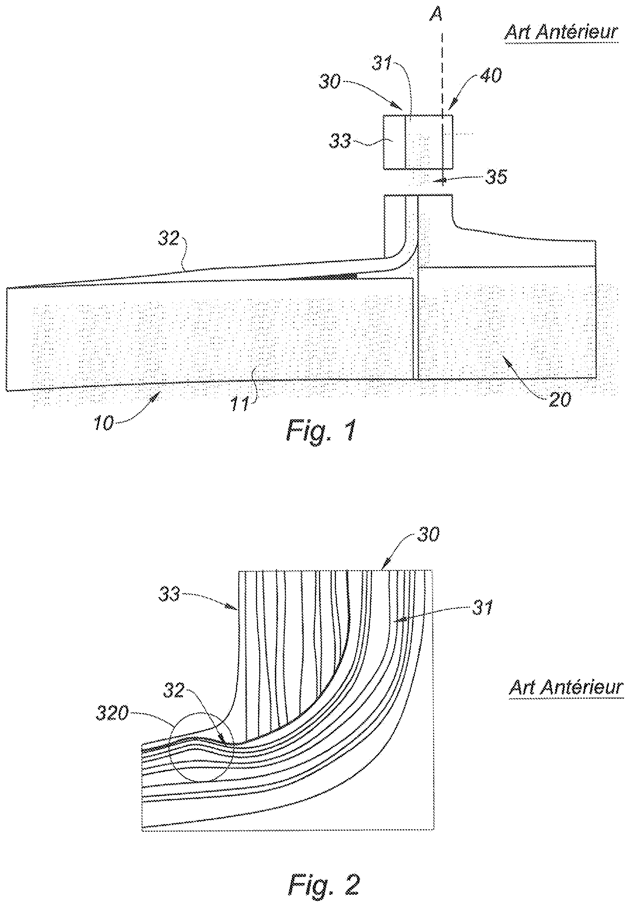

Un tel ensemble peut être utilisé, de façon non limitative, dans le montage de l'entrée d'air et de la section médiane de la nacelle, comme illustré plus particulièrement sur la figure 1.

La structure d'entrée d'air de la nacelle se divise en deux zones, à savoir d'une part, une lèvre d'entrée annulaire à profil aérodynamique adaptée pour permettre la captation optimale vers le turboréacteur de l'air nécessaire à l'alimentation de la soufflante et des compresseurs internes du turboréacteur, et, d'autre part, une structure aval comprenant une virole interne annulaire et un capot externe annulaire radialement espacé de la virole interne, virole interne sur laquelle est rapportée la lèvre et destinée à canaliser convenablement l'air vers la soufflante.

Une telle virole est illustrée sur la figure 1 et désignée par la référence 10.

Cette virole interne 10 de la structure d'entrée d'air est traitée de façon classique pour former une structure 11 acoustique d'atténuation de l'onde sonore.

Elle peut comporter une peau interne perméable à l'air, une peau externe imperméable à l'air et une âme alvéolaire en nid d'abeille.

D'autres variantes de réalisation sont envisageables, comme le remplacement de l'âme alvéolaire par de la mousse poreuse ou des microsphères.

En référence à la figure 1 également, la section médiane, quant à elle, comprend d'une part, un carter interne 20 entourant la soufflante du turboréacteur (non illustrée) prolongeant la virole interne 10 de la structure d'entrée d'air et, d'autre part, une structure externe (non représentée) de carénage du carter prolongeant le capot externe de la structure d'entrée d'air.

La virole interne 10 est destinée à être fixée au carter de soufflante 20 dans un plan de jonction désigné par la lettre A, grâce à des brides de raccordement périphériques 30, 40 placées, respectivement, sur l'extrémité aval de la virole interne 10 et sur l'extrémité amont du carter de soufflante 20.

Dans un mode de réalisation, la bride de raccordement 30 comprend une première partie 31 s'étendant suivant une direction radiale et une deuxième partie 32 s'étendant selon la direction longitudinale du turboréacteur, de sorte que la section longitudinale de la bride 30 est en forme de L.

La deuxième partie de raccordement 32 de la bride 30 correspondant à la virole interne 10 de la structure d'entrée d'air est destinée à être fixée sur ladite virole 10.

La bride 30 est, généralement, réalisée par drapage de tissus pré-imprégnés avec une cuisson autoclave, en tissus secs ou avec une préforme tissée avec injection de type Resin Transfer Moulding en termes anglo-saxons ou par infusion.

La bride de raccordement 30 de la virole interne 10 peut être reliée par tous moyens de fixation connus et /ou moyens de centrage permettant d'assurer le centrage des deux structures à fixer ensemble (non illustrés sur la figure 1) à la bride de raccordement 40 du carter 20 au niveau du plan de jonction A, à travers l'orifice 35.

Classiquement, une plaque de renfort 33 peut être rapportée sur l'une et/ou l'autre des brides, ici la bride 30 correspondant à la virole interne 10.

Cette plaque de renfort 33 permet de répondre aux exigences de résistance structurale de la bride de raccordement 30.

Elle est adaptée pour mettre en forme la bride correspondante et notamment pour définir le rayon de courbure de cette dernière.

Elle est également adaptée pour définir la raideur de la bride 30 sur l'ensemble de sa circonférence.

Elle prévient aussi le dépliage des plis de la bride 30 dans le rayon lorsque la virole 10 est soumise à des efforts de traction et amortit les contraintes générées par le serrage des moyens de fixation.

Toutefois, comme cela peut être constaté sur la figure 2, la plaque de renfort 33 génère, lorsqu'elle est rapportée sur la bride 30, un bourrelet 320 dans la bride 30, situé au niveau du côté de la plaque de renfort 33.

Ce bourrelet 320 forme une variation d'épaisseur localement brutale, typiquement de 0,5mm, qui engendre une variation du taux de fibre et de l'orientation de ces fibres du matériau composite formant la bride 30.

Ceci est dommageable dans les cas extrêmes de chargement pour la tenue mécanique de la bride 30.

D'autre part, la variation de raideur entre la partie bride 30 et la virole 10 peut, dans le cas d'un effort radial appliqué sur la bride 30, engendrer un point faible au niveau de la partie virole à la transition bride 30 /virole 10.

La présente invention a donc pour objet de pallier cet inconvénient.

A cet effet, la présente invention propose un ensemble pour une nacelle d'aéronef, remarquable en ce qu'il comprend:
- une bride comportant au moins une première partie destinée à être fixée à une autre bride et une deuxième partie s'étendant transversalement par rapport à la première partie et destinée à être fixée sur un panneau dudit ensemble, la bride étant formée en matériau composite; et
- une plaque de renfort rapportée indirectement au moyen d'une plaque intermédiaire fixée entre la plaque de renfort et la bride, ladite plaque de renfort présentant une partie de forme biseautée en regard de la deuxième partie de la bride, la plaque intermédiaire rapportée contre la plaque de renfort s'étendant, au niveau de son extrémité en contact avec la deuxième partie de la bride, au-delà de la partie d'extrémité de la plaque de renfort.

Grâce à la présente invention, on évite qu'un bourrelet soit engendré sur la deuxième partie de la bride et ainsi, on améliore la santé matière du composite.

De plus, cette forme biseautée permet une transition de raideur moins brutale entre la bride et la virole sur laquelle elle repose et améliore la tenue mécanique de la virole dans la zone de jonction avec la bride sous sollicitation radiale.

Selon des modes particuliers de réalisation de l'invention, l'ensemble selon l'invention peut comprendre une ou plusieurs des caractéristiques suivantes, prise(s) isolément ou en combinaison techniquement possible :
- la plaque intermédiaire est réalisée en un matériau composite ou en un matériau métallique, tel que l'aluminium ou le titane ;
- la plaque intermédiaire présente une épaisseur comprise entre 0,1mm et 3 mm ;
- la partie biseautée de la plaque de renfort est une partie d'extrémité de cette plaque.

D'autres caractéristiques et avantages de la présente invention, apparaîtront à la lecture de la description détaillée qui va suivre, selon des modes de réalisation donnés à titre d'exemples non limitatifs et en référence aux dessins annexés sur lesquels :
- la figure 1 est une vue partielle en coupe d'un assemblage d'une structure d'entrée d'air et d'un carter de soufflante selon l'art antérieur ;
- la figure 2 est une vue partielle en coupe de l'assemblage de la figure 1 au niveau de l'interface entre une bride de cet assemblage et une plaque de renfort de cette bride ;
- la figure 3 est une vue partielle en coupe d'une bride selon un aspect non revendiqué, ladite bride pouvant être utilisée dans un assemblage tel que représenté sur la figure 1 ;
- la figure 4 est une vue partielle en coupe d'une bride selon un autre aspect non revendiqué, ladite bride pouvant être utilisée dans un assemblage tel que représenté sur la figure 1 ;
- la figure 5 est une vue partielle en coupe d'une bride selon l'invention, ladite bride pouvant être utilisée dans un assemblage tel que représenté sur la figure 1 ;
- la figure 6 est une vue partielle en coupe d'une bride selon un autre aspect non revendiqué, ladite bride pouvant être utilisée dans un assemblage tel que représenté sur la figure 1.

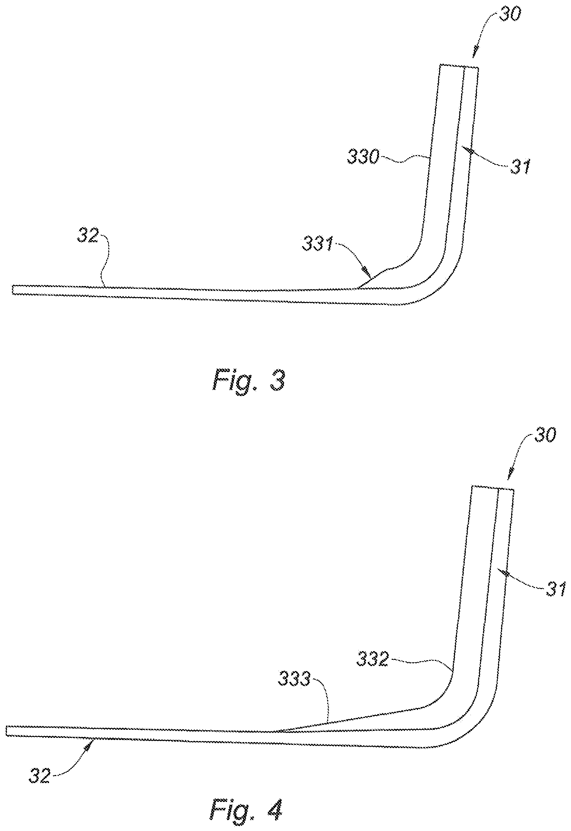

De manière générale, et comme représentés sur les figures 3 à 6 annexées, l'invention concerne un ensemble pour une nacelle d'aéronef comprenant :
- une bride 30 comportant au moins une première partie 31 destinée à être fixée à une autre bride 40 et une deuxième partie 32 s'étendant transversalement par rapport à la première partie 31 destinée à être fixée sur un panneau dudit ensemble. Dans une variante de réalisation, cette partie 32 peut éventuellement être fixée sur un panneau acoustique dudit ensemble.
- une plaque de renfort 330, 332, 334 rapportée directement sur la bride 30 ou, éventuellement, indirectement au moyen d'une plaque intermédiaire 36 fixée entre la plaque de renfort 330, 332, 334 et la bride 30, ladite plaque de renfort 330, 332, 334 présentant une partie de forme biseautée en regard de la deuxième partie 32 de la bride 30.

La forme biseautée de la plaque de renfort 330, 332, 334 permet de limiter la dimension d'un bourrelet dans la bride 30, comme représenté sur la figure 2, voire d'éviter la formation d'un tel bourrelet.

La forme biseautée permet, en outre, une meilleure transition de raideur entre la bride 30 et le panneau de virole sur laquelle elle est fixée. Un premier mode de réalisation, non revendiqué, l'invention est décrit à l'appui de la figure 3.

Selon ce premier mode de réalisation, la plaque de renfort 330 comprend une partie d'extrémité biseautée 331, qui est en contact direct avec la deuxième partie 32 de la bride 30.

Le fait que l'extrémité biseautée 331 de la plaque de renfort 330 soit en contact avec la deuxième partie 32 de la bride 30 limite la dimension du bourrelet tel que représenté sur la figure 2, bourrelet qui est susceptible d'être formé sur la partie 32 lorsque la plaque de renfort 330 est rapportée directement sur la bride 30 et exerce une pression sur la bride 30 pour la mettre en forme et définir son rayon de courbure.

La forme biseautée permet une transition de raideur plus progressive entre la virole et la bride 30 et améliore la tenue mécanique dans la zone de transition entre la bride 30 et la virole;

Il convient de noter que cette plaque de renfort 330 peut être réalisée dans un matériau composite, de façon indépendante à la bride 30.

Pour cela, la plaque de renfort 330 peut être produite par injection de type RTM, par infusion ou par cuisson en autoclave.

Elle est généralement précuite, puis rapportée sur la bride 30 sur des plis de la bride non encore polymérisés.

Dans des variantes non limitatives de réalisation, cette plaque de renfort 330 peut comprendre des plis pré-imprégnés, du tissu sec, des préformes tissées ou des fibres courtes.

La plaque de renfort 30 peut aussi être métallique.

La plaque de renfort 330 présente ainsi une raideur lui permettant de remplir sa fonction de renfort de la bride 30.

Un deuxième mode de réalisation, non revendiqué, de l'invention est décrit à l'appui de la figure 4.

Dans ce deuxième mode de réalisation, la plaque de renfort 332 présente une partie d'extrémité également biseautée, se présentant sous la forme d'un biseau allongé 333 s'étendant sur la majeur partie de la longueur de la deuxième partie 32 de la bride 30 voire de l'ensemble de la longueur de la deuxième partie 32 de la bride 30, directement au contact de la bride 30.

Cette forme allongée 333 est avantageuse dans la mesure où elle permet de mieux répartir l'effet de la pression sur la deuxième partie 32 de la bride 30, par rapport au premier mode de réalisation, le bourrelet susceptible d'être formé lorsque la plaque de renfort 332 est rapportée directement sur la bride 30 est de dimension réduite voir supprimé.

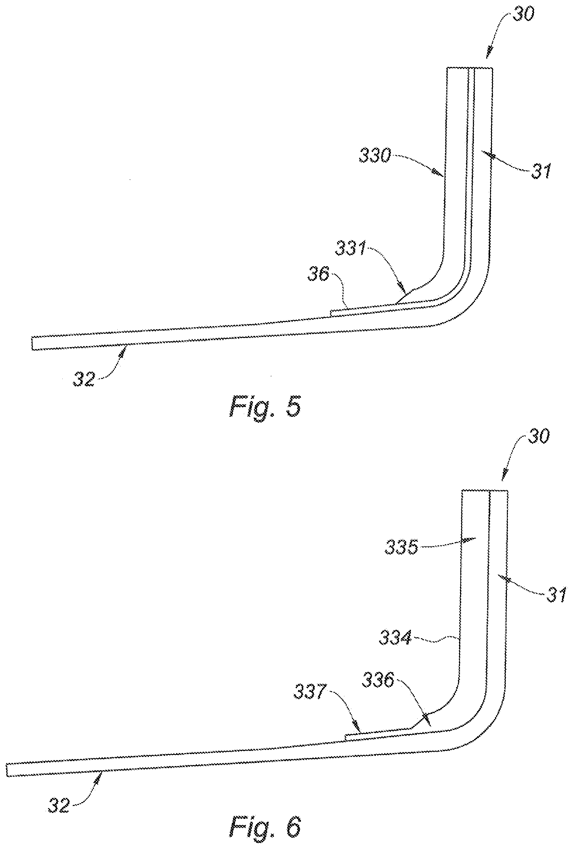

La plaque de renfort 332 peut être fabriquée de la même façon que la plaque de renfort 330 du premier mode de réalisation et comprendre des constituants identiques. L'invention revendiquée est décrit à l'appui de la figure 5. Selon l'invention, la plaque de renfort 330, laquelle est identique à la plaque de renfort décrite pour le premier mode de réalisation, n'est plus directement rapportée contre la bride 30.

En effet, selon l'invention, il est prévu une plaque intermédiaire 36, fixée entre la bride 30 et la plaque de renfort 330.

Cette plaque intermédiaire 36 est une variante de réalisation de la solution précédente qui peut être suivant les matériaux retenus pour la réalisation de la plaque plus facile à réaliser.

Dans ce cas, la plaque intermédiaire 36 permet de lisser la pression appliquée sur les plis de la partie 32 de la bride 30 par la plaque de renfort 330-331 lors de la cuisson.

Avantageusement, et comme illustré sur la figure 5, cette plaque intermédiaire 36 est rapportée contre la première partie 31 de la bride et, s'étend au niveau de son extrémité en contact avec la deuxième partie 32 de la bride 30 au-delà de la partie d'extrémité biseautée 331 de la plaque de renfort 330.

Cela permet de répartir encore mieux les efforts appliqués à la bride 30, en l'occurrence à la deuxième partie 32 de la bride 30, par la plaque de renfort 330.

Ainsi, la plaque intermédiaire 36 limite, voire supprime, tout phénomène de poinçonnement de la bride 30 qui pourrait advenir lorsque l'ensemble formé par la plaque intermédiaire 36 et la plaque de renfort 330 est rapporté sur la bride 30.

En effet, la plaque de renfort 330 et la plaque intermédiaire 36 seront généralement fabriquées puis assemblées l'une à l'autre, avant d'être rapportées ensemble sur la bride 30.

La plaque intermédiaire 36 peut être réalisée en un matériau composite, par exemple avec des constituants identiques à ceux de la plaque de renfort 330.

En variante, cette plaque intermédiaire 36 peut être réalisée en un matériau métallique tel que l'aluminium ou le titane.

Par ailleurs, la plaque intermédiaire 36 présente typiquement une épaisseur comprise entre 0,1 et 3 mm.

Un quatrième mode de réalisation, non revendiqué, de l'invention est décrit à l'appui de la figure 6.

Ce quatrième mode de réalisation vise à proposer tous les avantages du troisième mode de réalisation.

Cependant, dans ce quatrième mode de réalisation, la pièce de renfort 334 présente une forme assimilable à la forme obtenue, pour le troisième mode de réalisation, une fois que la plaque de renfort 330 et la plaque intermédiaire 36 ont été assemblées.

Ainsi, la plaque de renfort 334 comprend :
- une première partie 335 rapportée contre la première partie 31 de la bride 30,
- une deuxième partie 336, située dans le prolongement de la première partie 335 de la plaque de renfort 334 et formant la partie biseautée de cette plaque de renfort 334, cette deuxième partie 336 de la plaque de renfort 334 étant rapportée contre la deuxième partie 32 de la bride 30 ; et
- une troisième partie 337, située dans le prolongement de la partie biseautée 336 de la plaque de renfort 334 et rapportée contre la deuxième partie 32 de la bride 30

Par ailleurs, la troisième partie 337 de la plaque de renfort 334 peut présenter une épaisseur inférieure à celle des premières 335 et seconde 336 parties de la plaque de renfort 334.

Son épaisseur peut être comprise entre 0,1 et 3 mm , comme cela est le cas pour l'épaisseur de la plaque intermédiaire 36 décrite dans le troisième mode de réalisation.

La plaque de renfort 334 peut être fabriquée de la même façon que la plaque de renfort 330 du premier mode de réalisation et comprendre les mêmes constituants.

Bien entendu, la présente invention n'est nullement limitée aux modes de réalisation décrits et représentés, fournis à titre purement illustratif.

Ainsi, par exemple, quel que soit le mode de réalisation envisagé, il convient de noter que l'invention n'est pas limitée aux brides en forme de L, mais pourrait s'appliquer à d'autres brides présentant au moins deux parties qui s'étendent transversalement l'une par rapport à l'autre.

C'est par exemple le cas des brides en T.

## Revendications

1. Ensemble pour une nacelle d'aéronef, **caractérisé en ce qu'**il comprend:
- une bride (30) comportant au moins une première partie (31) destinée à être fixée à une autre bride (40) et une deuxième partie (32) s'étendant transversalement par rapport à la première partie (31) et destinée à être fixée sur un panneau, la bride (30) étant formée en matériau composite ; et
- une plaque de renfort (330, 332, 334) rapportée indirectement au moyen d'une plaque intermédiaire (36) fixée entre la plaque de renfort (330, 332, 334) et la bride (30), ladite plaque de renfort (330, 332, 334) présentant une partie de forme biseautée en regard de la deuxième partie (32) de la bride (30),
la plaque intermédiaire (36) rapportée contre la plaque de renfort (330, 332, 334) s'étendant, au niveau de son extrémité en contact avec la deuxième partie (32) de la bride (30), au-delà de la partie d'extrémité (331) de la plaque de renfort (330)..

2. Ensemble selon la revendication 1, **caractérisé en ce que** la plaque intermédiaire (36) est réalisée en un matériau composite ou en un matériau métallique, tel que l'aluminium ou le titane.

3. Ensemble selon l'une des revendications 1 ou 2, **caractérisé en ce que** la plaque intermédiaire (36) présente une épaisseur comprise entre 0.1 mm et 3 mm.

4. Ensemble selon l'une des revendications précédentes, **caractérisé en ce que** la partie biseautée de la plaque de renfort (330) est une partie d'extrémité (331) de cette plaque (330).

## Patentansprüche

1. Baugruppe für eine Luftfahrzeuggondel, **dadurch gekennzeichnet, dass** sie umfasst:
- einen Flansch (30), zumindest einen ersten Abschnitt (31) umfassend, der dazu bestimmt ist, an einem anderen Flansch (40) befestigt zu werden, und einen zweiten Abschnitt (32), der sich querlaufend im Verhältnis zum ersten Abschnitt (31) erstreckt und dazu bestimmt ist, an einem Paneel befestigt zu werden,
wobei der Flansch (30) aus einem Verbundmaterial gebildet wird; und
- eine Verstärkungsplatte (330, 332, 334), die indirekt anhand einer Zwischenplatte (36) beigebracht wird, die zwischen der Verstärkungsplatte (330, 332, 334) und dem Flansch befestigt ist, wobei die besagte Verstärkungsplatte (330, 332, 334) einen Abschnitt in einer abgeschrägten Form gegenüber dem zweiten Abschnitt (32) des Flansches (30) aufweist,
wobei sich die Zwischenplatte (36), die an der Verstärkungsplatte (330, 332, 334) beigebracht ist, im Bereich ihres Endes in Kontakt mit dem zweiten Abschnitt (32) des Flansches (30) über den Endabschnitt (331) der Verstärkungsplatte (330) hinaus erstreckt.

2. Baugruppe nach Anspruch 1, **dadurch gekennzeichnet, dass** die Zwischenplatte (36) aus einem Verbundwerkstoff oder aus einem metallischen Werkstoff, wie Aluminium oder Titan gefertigt ist.

3. Baugruppe nach Anspruch 1 oder 2, **dadurch gekennzeichnet, dass** die Zwischenplatte (36) eine Dicke zwischen 0,1 mm und 3 mm aufweist.

4. Baugruppe nach einem der vorhergehenden Ansprüche, **dadurch gekennzeichnet, dass** der abgeschrägte Abschnitt der Verstärkungsplatte (330) ein Endabschnitt (331) dieser Platte (330) ist.

## Claims

1. An assembly for an aircraft nacelle, **characterized in that** it comprises:
- a flange (30) including at least a first portion (31) intended to be fastened to another flange (40) and a second portion (32) extending transversely relative to the first portion (31) and intended to be fastened on a panel, the flange (30) being formed of a composite material; and
- a reinforcement plate (330, 332, 334) indirectly attached by means of an intermediate plate (36) fastened between the reinforcement plate (330, 332, 334) and the flange (30), said reinforcement plate (330, 332, 334) having a beveled portion facing the second portion (32) of the flange (30),
the intermediate plate (36) attached against the reinforcement plate (330, 332, 334) extending, at the end thereof in contact with the second portion (32) of the flange (30), beyond the end portion (331) of the reinforcement plate (330).

2. The assembly according to claim 1, **characterized in that** the intermediate plate (36) is made of a composite material or of a metal material such as aluminum or titanium.

3. The assembly according to any of claims 1 or 2, **characterized in that** the intermediate plate (36) has a thickness comprised between 0.1 mm and 3 mm.

4. The assembly according to any of the preceding claims, **characterized in that** the beveled portion of the reinforcement plate (330) is an end portion (331) of this plate (330).
